# EUROPÄISCHE PATENTSCHRIFT

(11) **EP 2 674 313 B1**
(45) Veröffentlichungstag und Bekanntmachung des Hinweises auf die Patenterteilung: **06.07.2016**
(21) Anmeldenummer: 13160074.4
(22) Anmeldetag: 20.03.2013
(51) Int. Cl.: B60K 7/00, B60K 17/04, B60K 17/30, B60K 17/32, B62D 49/06

(54) **Lenkachse für landwirtschaftliche Fahrzeuge**
Steering axle for agricultural vehicles
Essieu directeur pour véhicules agricoles

(30) Priorität: 13.06.2012 DE 102012011573
(43) Veröffentlichungstag der Anmeldung: 18.12.2013
(73) Patentinhaber: CLAAS Selbstfahrende Erntemaschinen GmbH, 33428 Harsewinkel (DE)
(72) Erfinder: Wagemann, Sebastian, 59302 Oelde (DE); Speckamp, Dirk, 59073 Hamm (DE)

(56) Entgegenhaltungen:
- EP-A2- 1 466 772
- WO-A1-2005/118379
- DE-A1-102006 041 861
- US-A1- 2008 179 128

## Beschreibung

Die Erfindung betrifft eine Lenkachse für landwirtschaftliche Fahrzeuge nach dem Oberbegriff des Anspruchs 1.

Bei handelsüblichen Lenkachsen für Mähdrescher werden beispielsweise zum Antrieb der Räder in der Nähe der Laufräder angeordnete großvolumige Radialkolbenmotoren mit Direktantrieb verwendet. Die Anordnung in den Rädern bedingt eine komplexe und kostenintensive hydraulische Verbindung.

Weiterhin sind im Handel Lenkachsen bekannt, bei denen anstelle der Radialkolbenmotoren Axialkolbenmaschinen mit zweistufigen Planetengetrieben verwendet werden. Auch hierbei ist ein aufwendiger und bruchgefährdeter hydraulischer Anschluss bis zu den Rädern erforderlich.

Weiterhin sind rein mechanisch angetriebene Lenkachsen bei handelsüblichen landwirtschaftlichen Fahrzeugen in Gebrauch, die jedoch aufgrund der vielfältigen mechanischen Komponenten ebenfalls sehr aufwendig sind und insbesondere für eine vollelektronische Regelung nicht geeignet sind.

Mit der Druckschrift EP 1 466 772 B1 ist ein Antriebssystem für Fahrzeuge bekannt geworden, bei dem beidseits eines Verbrennungsmotors für den Antrieb eines Generators zwei Elektromotoren als Einzelradantrieb angeordnet sind, die mittels eines Planetengetriebes kraftschlüssig mit den gelenkten Laufrädern verbunden sind. Als Alternative zu einem elektrischen Antrieb wird in dieser Druckschrift ein hydraulischer Antrieb erwähnt, die Anordnung seitlich neben dem Verbrennungsmotor ist jedoch nur für Elektroantriebe offenbart. Zudem wäre auch hier bei Verwendung von Hydraulikantrieben an der gleichen Stelle eine aufwendige und bruchgefährdete hydraulische Verbindung nach auben zu den Laufrädern hin erforderlich.

Aus der US 2008/0179128 A1 ist eine Lenkachse gemäß dem Oberbegriff des Anspruchs 1 bekannt.

Aufgabe der Erfindung ist es demgegenüber, eine Lenkachse für landwirtschaftliche Fahrzeuge vorzuschlagen, bei der aufwendige und bruchgefährdete Leitungen bis zu den Rädern vermeidbar sind und die sich durch eine einfachere Montage der Antriebsmotoren auszeichnet.

Diese Aufgabe wird für eine Lenkachse nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Durch diese Anordnung der Antriebsmotoren ist im Falle der Verwendung hydraulischer Motoren eine erheblich einfachere hydraulische Verbindung möglich. Es ist keine aufwendige und bruchgefährdete Leitungsführung zu den Laufrädern hin mehr erforderlich. Durch die mittige Anordnung der Antriebsmotoren wird zudem der Bauraum in Radnähe weniger eingeschränkt. Hierdurch sind je nach Bedarf weitere konstruktive Vorteile möglich.

So können beispielsweise kleinere Räder verwendet werden, die damit einen größeren Pendelwinkel bzw. Verschwenkungswinkel der Achse ermöglichen. Bei herkömmlichen Ausführungen mit größeren Rädern, die einen vergleichbaren Pendelwinkel mit einer Höhenverstellung erreichen, entfällt eine solche Höhenverstellung des Fahrzeugs für den Transport bzw. die Arbeit im Gelände.

Auch im Falle anderer Antriebsmotoren, beispielsweise von Elektromotoren, ist der Anschluss vereinfacht, da elektrische Anschlussleitungen zu den Laufrädern hin ebenso bruchgefährdet sind und einen zusätzlichen Aufwand bedeuten.

Gemäß der Erfindung werden die wenigstens zwei Antriebsmotoren an einem gemeinsamen Zehtralachskörper befestigt. Ein solcher Zentralachskörper, der beispielsweise als Gehäuse ausgebildet sein kann, trägt somit beide Antriebsmotoren gemeinsam. Durch die mittige Anordnung zwischen den Laufrädern ist die Verwendung eines solchen Zentralachskörpers zur beidseitigen Motorhalterung möglich. Im Falle einer gehäuseförmigen Ausführung des Zentralachskörpers können zudem die wenigstens zwei Antriebsmotoren vor Verschmut
zung und äußeren mechanischen Belastungen geschützt wenigstens teilweise ins Innere des Zentralachskörpers aufgenommen werden.

Es ist zudem jeweils ein Montageflansch zwischen wenigstens einem Antriebsmotor und dem Zentralachskörper vorgesehen. Ein solcher Montageflansch vereinfacht als Befestigungselement oder Tragelement die Montage des jeweiligen Antriebmotors.

Hierbei sind beidseits des Zentralachskörpers jeweils ein ein- zwei- oder mehrteiliges Achsgehäuse zur Aufnahme wenigstens eines Teils des mechanischen Antriebsstrangs vorgesehen. Ein solches Achsgehäuse verlängert zum einen die mechanisch starre und belastbare Lenkachsenkonstruktion nach außen zu den Laufrädern hin, sodass diese letzlich an den

Achsengehäusen gelagert werden können. Zugleich wird der in den Gehäusen befindliche Teil des mechanischen Antriebsstrangs vor Verschmutzung und mechanischen Beschädigungen geschützt.

Im Falle zwei- oder mehrteiliger seitlicher Achsgehäuse ist zudem eine flexible Einstellung der Länge der Achse und somit der Spurbreite möglich, indem entweder Teile ausgetauscht oder in ihrer relativen Lage zueinander verändert werden. So können z. B. zwei ineinander verschiebbare Gehäuseteile vorgesehen werden, die in der gewünschten Länge miteinander verbunden, z. B. verschraubt werden.

Wie bereits oben angeführt, können als Antriebsmotoren sowohl hydraulische Motoren als auch Elektromotoren Verwendung finden, da bei beiden Motortypen durch die erfindungsgemäße mittige Anordnung Vorteile zu erzielen sind. Gegenüber vielen kostenträchtigen mechanischen Komponenten, wie beispielsweise Differentialen, Kupplungen, Getrieben etc. sind zudem ebenfalls beide Arten von Antriebsmotoren vorteilhaft.

In einer besonders vorteilhaften Ausführungsform werden als Antriebsmotoren hydraulische Radialkolbenmotoren vorgesehen. Radialkolbenmotoren zeichnen sich durch eine kompakte Bauart in Verbindung mit hohem Drehmoment aus.

Darüber hinaus ist es möglich, bei Radialkolbenmotoren einen hydraulisch ansteuerbaren Freilauf vorzusehen, sodass im Freilauf ohne regelungstechnischen Aufwand keine Kompressionsverluste während der Straßenfahrt auftreten. Hierdurch ergibt sich eine gesteigerte Effizienz des Antriebssystems. Durch eine einfache hydraulische Ansteuerung kann somit der Allradantrieb für den Arbeitsbetrieb zugeschaltet und für die Straßenfahrt abgeschaltet werden. Somit ist auch eine vergleichsweise große Geschwindigkeit für Straßenfahrt mit hoher Effizienz möglich. Im Übrigen bietet dieser Freilauf auch ohne die vorbeschriebenen Merkmale, wie z. B. der mittigen Anordnung der Motoren, Vorteile.

Vorzugsweise wird der mechanische Antriebsstrang so ausgebildet, dass er eine Gelenkwelle umfasst. Mittels der Gelenkwelle kann im mechanischen Antriebsstrang der größte Teil des Abstandes zwischen einem mittig angeordneten Antriebsmotor und dem durch den Motor anzutreibenden Laufrad energieeffizient, mit geringem Aufwand und zuverlässig überbrückt werden.

In Verbindung mit einem oben angeführten Achsgehäuse kann diese Gelenkwelle dabei ganz oder teilweise im Inneren eines solchen Gehäuses vor Verschmutzung und mechanischen Einwirkungen geschützt untergebracht werden.

In einer bevorzugten Weiterbildung der Erfindung wird zudem wenigstens ein Untersetzungsgetriebe in dem Antriebsstrang vorgesehen. Durch die Verwendung eines Untersetzungsgetriebes kann zur Realisierung der gleichen Zugkraft ein kleinerer Motor mit höherer Drehzahl verwendet werden, wodurch die Leistungsdichte der hydraulischen Komponenten im Falle eines Hydraulikmotors erhöht wird. Gegenüber großen, langsam drehenden Radmotoren ergibt sich somit ein weiterer Vorteil im Hinblick auf Herstellkosten und Gewicht.

Vorteilhafterweise wird als Untersetzungsgetriebe ein Planetengetriebe verwendet, das auf der Außenseite des Antriebsstrangs angeordnet ist. Ein solches Planetengetriebe kann beispielsweise im Radkopf oder in der Radnabe des anzutreibenden Laufrades untergebracht werden, sodass die Außenschale des Radkopfs bzw. die Radnabe selbst mit dem Abtrieb des Getriebes gekoppelt werden kann.

Vorzugsweise wird ein einstufiges Planetengetriebe verwendet, wodurch die thermischen Verluste durch Erwärmung des Schmiermittels, insbesondere bei Straßenfahrt, gegenüber einem zwei- oder mehrstufigen Getriebe deutlich reduzierbar sind.

In einer besonders vorteilhaften und einfachen Ausführungsform der Erfindung ergibt sich somit in Kombination mit der mittigen Anordnung der Antriebsmotoren bei einer erfindungsgemäßen Lenkachse ein Antriebsstrang, der als Verbindung zwischen Antriebsmotor und Laufrad bzw. Radnabe lediglich eine Gelenkwelle und ein Getriebe, insbesondere ein Planetengetriebe, beinhaltet. Auf diese Weise ergibt sich nicht nur ein einfacher und kostengünstiger Aufbau. Der Aufwand kann zudem dadurch verringert werden, dass in diesem Fall ohne Weiteres auch Komponenten aus rein mechanischen Antriebssystemen und Antriebssträngen einsetzbar sind.

Eine erfindungsgemäße Lenkachse wird, wie bereits erwähnt, bevorzugt bei selbstfahrenden landwirtschaftlichen Maschinen, insbesondere Erntemaschinen oder aber auch bei Traktoren oder ähnlichen Fahrzeugen eingesetzt.

Ein Ausführungsbeispiel der Erfindung ist in der Zeichnung dargestellt und wird anhand der Figuren nachfolgend näher erläutert.

Im Einzelnen zeigen
- Figur 1: eine perspektivische Darstellung einer erfindungsgemäßen Lenkachse,
- Figur 2: eine Frontansicht einer Lenkachse gemäß Figur 1,
- Figur 3: eine schematische Querschnittsdarstellung einer Lenkachse gemäß Figur 1 und
- Figur 4: eine vergrößerte Darstellung der linken Hälfte der Lenkachse gemäß Figur 3.

Die Lenkachse 1 umfasst einen Zentralachskörper 2, der an seiner Oberseite eine Lageraufnahme 3 für die pendelnde Lagerung der Lenkachse 1 aufweist.

An dem Zentralachskörper 2 sind beidseits jeweils ein Montageflansch 4, 5 befestigt, an die sich jeweils ein zweiteiliges Achsengehäuse 6, 7 anschließt. Die Achsengehäuse 6, 7 bestehen aus einem inneren Gehäuseteil 8, 9, das fest mit dem Zentralachsekörper 2 verbunden, im konkreten Fall verschraubt ist, sowie zwei äußeren, in die Gehäuseteile 8, 9 einschiebbaren Gehäuseteilen 10, 11. An den äußeren Enden der äußeren Gehäuseteile 10, 11 befinden sich zwei Aufnahmen 12, 13 für jeweils zwei Lagerzapfen 14, 15, über die eine Radnabe 16 lenkbar an den äußeren Gehäuseteilen 10, 11 gelagert ist.

Die Lagerzapfen 14, 15 sind über eine außenseitig um die Lenkachse 1 herumgeführte Spange 17 verbunden, die als Lenkhebel dient und die eine Stangenaufnahme 18 aufweist, in der eine Spurstange 19 gelagert ist. Der Lenkwinkel der Radnabe 16 wird in üblicher, nicht näher beschriebener Weise verstellt.

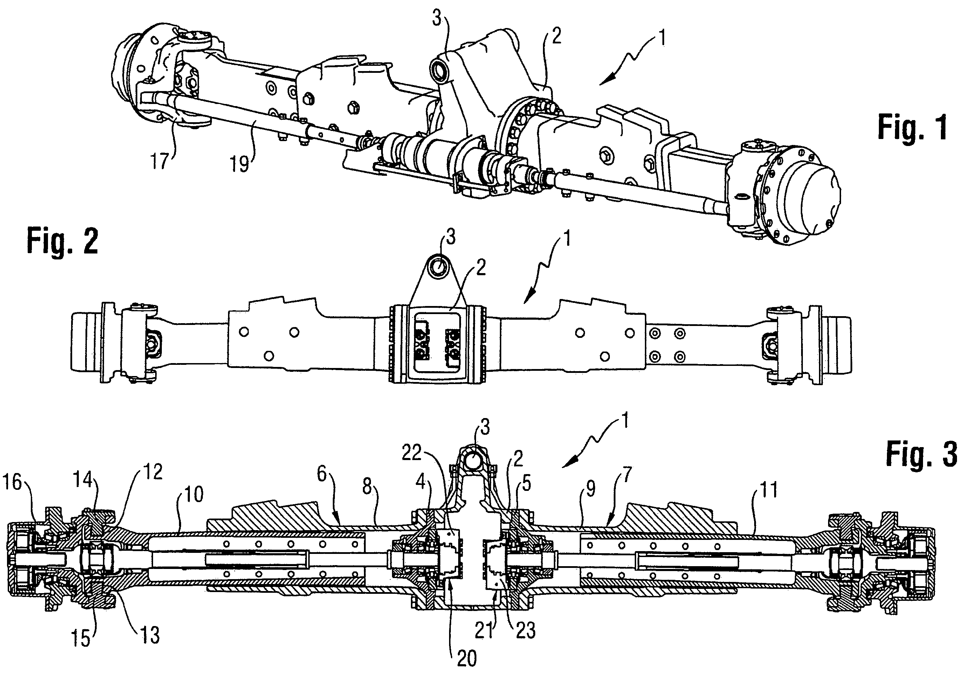

Im Innern des Zentralachskörpers 2 befinden sich zwei Radialkolbenmotoren 20, 21, mittels denen die beiden Laufräder über die Radnaben 16 angetrieben werden. Die zugehörigen Motorengehäuse 22, 23 sind leicht exzentrisch zur Rotorachse des Motors ausgebildet und in der dargestellten Ausführungsform um jeweils 180° verdreht am Montageflansch 4 montiert, sodass sie sich in den Darstellungen gemäß den Figuren 2 und 3 auf unterschiedlicher Höhe befinden.

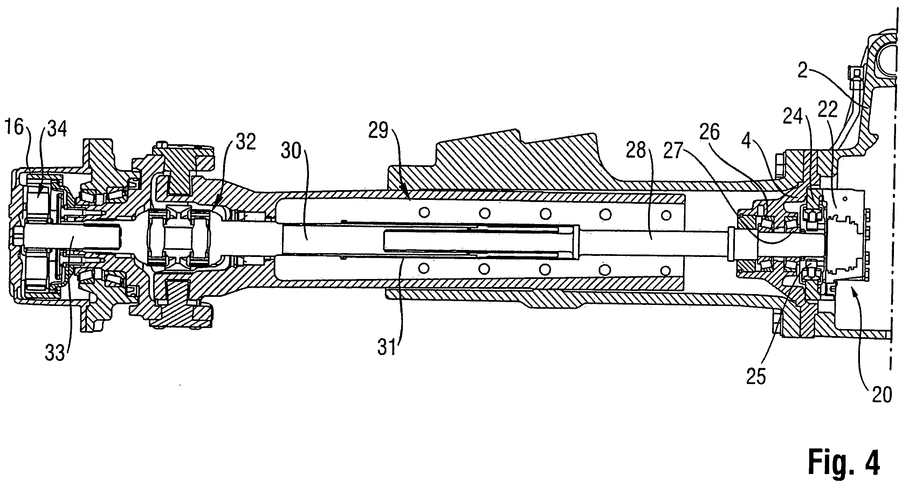

Im Folgenden wird der Antrieb anhand der linken Seite der Lenkachse 1, wie in Figur 4 dargestellt, beschrieben. Die rechte Seite ist analog aufgebaut.

An das Motorengehäuse 22 angefügt ist eine Kurvenscheibe 24 des Radialkolbenmotors 20, auf der die Radialkolben abrollen und in deren Innern sich demnach der Rotor 25 mit dem Kolben dreht. Im Montageflansch 4 befinden sich zwei Wälzlager 26, 27, in denen eine Innenwelle 28 einer mehrteiligen Gelenkwelle 29 gelagert ist. Auf der Innenwelle 28 ist der Rotor 25 endseitig befestigt, sodass er gemeinsam mit der Innenwelle 28 in den Wälzlagern 26, 27 gelagert ist.

Es ist ohne weiteres erkennbar, dass somit der jeweilige Radialkolbenmotor 20 zusammen mit dem Montageflansch 4 aus dem Zentralachskörper 2 entfernt werden kann und dann von der Seite des Motorengehäuses 22, 23 zugänglich ist.

Die Gelenkwelle 29 umfasst neben der Innenwelle 28 eine Außenwelle 30, die zusammen mit der Innenwelle 28 eine teleskopierbare Gelenkwelle 29 bildet. Im Bereich des Einschubs der Innenwelle 28 in die Außenwelle 30 befindet sich eine Abdeckung 31, durch die die Gelenkwelle 29 gekapselt und somit vor Verunreinigungen geschützt ist. Die Laufflächen der ineinander teleskopierbaren Innenwellen 28 bzw. Außenwellen 30 sind vorzugsweise gleitfähig beschichtet, sodass die Gelenkwelle 29 schmiermittelfrei betrieben werden kann. Eine solche Gelenkwelle ist auch in rein mechanischen Antrieben von Vorteil und kann daher auch dort eingesetzt werden.

Am äußeren Ende der Außenwelle 30 befindet sich ein Kreuzgelenk 32, mittels dem in bekannter Weise das Drehmoment von der Gelenkwelle 29 auf die Antriebswelle 33 eines Planetengetriebes 34 übertragbar ist.

Der Planetenträger des Planetengetriebes 34 bildet die Abtriebsseite des Planetengetriebes 34 und ist demnach mit der jeweiligen Radnabe 16 verbunden.

Die anhand der Figuren dargestellte und beschriebene Lenksachse 1 bietet viele Vorteile, so stellt die Lenkachse 1 im montierten Zustand eine Starrachse dar, die über die Lageraufnahme 3 pendelnd am jeweiligen Fahrzeug befestigbar ist.

In dem Zentralachskörper 2 sind die jeweiligen Einzelantriebsmotoren in Form von Radialkolbenmotoren 20, 21 mittig untergebracht, leicht anzuschließen und mechanisch über einen oben beschriebenen Antriebsstrang mit der jeweiligen Radnabe 16 verbunden.

Durch die Gehäuseteile 8, 9 bzw. 10, 11 ist der mechanische Antriebsstrang vollständig ummantelt und somit vor Verschmutzung und äußeren mechanischen Beeinträchtigungen geschützt. Durch die zweiteilige Ausbildung der Achsengehäuse 6, 7 lässt sich die Länge der Lenkachse 1 und somit die Spurbreite verstellen. In den dargestellten Ausführungsbeispielen wird jeweils das innere Gehäuseteil 8, 9 in der gewünschten Position mit dem äußeren Gehäuseteil 10, 11 verschraubt.

Durch die längenvariable Ausgestaltung der Gelenkwelle 29 kann in dieser Ausführungsform die Spurbreite sogar bei vollständig montierter Achse 1 noch verändert werden.

Die verwendeten Radialkolbenmotoren 20, 21 sind vorteilhafterweise mit einem Freilauf ausgestaltet, sodass der Antrieb der Lenkachse 1 im Arbeitsbetrieb zuschaltbar und im Straßenbetrieb abschaltbar ist.

Die über die Zwischenflansche 4, 5 gut im Zentralachskörper 2 montierbaren Achsengehäuse 6, 7 werden hydraulisch zentral im Zentralachskörper 2 angeschlossen, sodass keine aufwendige und anfällige Hydraulikverbindung nach außen zu den Radnaben 16 verlegt werden muss. Der mechanische Antriebsstrang bewirkt eine effiziente Drehmomentübertragung aus dem Zentralachskörper 2 bis hin zu den Radnaben 16. Durch die einstufige Ausgestaltung der Planetengetriebe 34 wird der thermische Verlust beim Straßenbetrieb im Leerlauf der Motoren trotz vergleichsweise großer Straßengeschwindigkeit im Rahmen gehalten, sodass auch hier weniger Verluste auftreten.

Die dargestellte Lenkachse stellt ein vorteilhaftes Ausführungsbeispiel der beanspruchten Lenkachse dar, das sehr flexibel mit geringem Aufwand herstellbar und montierbar ist und zugleich einen zuschaltbaren Allradantrieb der Lenkachse realisiert.

### Bezugszeichenliste:

- 1: Lenkachse
- 2: Zentralachskörper
- 3: Lageraufnahme
- 4: Montageflansch
- 5: Montageflansch
- 6: Achsengehäuse
- 7: Achsengehäuse
- 8: inneres Gehäuseteil
- 9: inneres Gehäuseteil
- 10: äußeres Gehäuseteil
- 11: äußeres Gehäuseteil
- 12: Aufnahme
- 13: Aufnahme
- 14: Achszapfen
- 15: Achszapfen
- 16: Radnabe
- 17: Spange
- 18: Stangenaufnahme
- 19: Spurstange
- 20: Radialkolbenmotor
- 21: Radialkolbenmotor
- 22: Motorengehäuse
- 23: Motorengehäuse
- 24: Kurvenscheibe
- 25: Rotor
- 26: Wälzlager
- 27: Wälzlager
- 28: Innenwelle
- 29: Gelenkwelle
- 30: Außenwelle
- 31: Abdeckung
- 32: Kreuzgelenk
- 33: Antriebswelle
- 34: Planetengetriebe

## Patentansprüche

1. Lenkachse (1) für landwirtschaftliche Fahrzeuge, wie selbstfahrende Erntemaschinen, Traktoren oder dergleichen, mit wenigsten zwei Antriebsmotoren (20, 21) für wenigstens zwei Laufräder beidseits der Lenkachse (1), wobei die wenigstens zwei Antriebsmotoren (20, 21) nebeneinander zwischen den Laufrädern angeordnet sind und beidseits jeweils ein mechanischer Antriebsstrang (29, 33, 34) zwischen Antriebsmotor (20, 21) und Laufrad vorgesehen ist, wobei die Lenkachse (1) Achsgehäuse (6, 7) aufweist, sowie einen Zentralachskörper (2), der eine Lagervorrichtung (3) umfasst, mittels der die gesamte Lenksachse (1) pendelnd am Fahrzeug befestigbar ist, **dadurch gekennzeichnet, dass** die wenigstens zwei Antriebsmotoren (20, 21) im Wesentlichen mittig zwischen den Laufrädern angeordnet, und an dem gemeinsamen Zentralachskörper (2) befestigt sind, wobei an dem Zentralachskörper (2) beidseits jeweils ein Montageflansch (4, 5) befestigt ist, an dem sich jeweils eines der beiden Achsgehäuse (6, 7) anschließt, wobei die Achsgehäuse (6, 7) zwei- oder mehrteilig ausgebildet sind, und wobei der jeweilige Montageflansch (4, 5) zwischen dem Antriebsmotor (20, 21) und dem Zentralachskörper (2) vorgesehen ist.

2. Lenkachse nach Anspruch 1, **dadurch gekennzeichnet, dass** die Achsgehäuse im Wesentlichen geschlossene Achsgehäuse (6, 7) zur Aufnahme wenigstens eines Teils des mechanischen Antriebsstrangs (29, 33, 34) sind.

3. Lenkachse nach einem der Ansprüche1 bis 2, **dadurch gekennzeichnet, dass** als Antriebsmotoren (20, 21) Hydraulik- oder Elektromotoren vorgesehen sind.

4. Lenkachse nach einem der Ansprüche 1 bis 3, **dadurch gekennzeichnet, dass** als Antriebsmotoren hydraulische Radialkolbenmotoren (20, 21) vorgesehen sind.

5. Lenkachse (1) nach einem der Ansprüche 1 bis 4, **dadurch gekennzeichnet, dass** die wenigstens zwei Antriebsmotoren (20, 21) als Radialkolbenmotoren ausgebildet sind, die einen hydraulisch ansteuerbaren Freilauf umfassen.

6. Lenkachse nach einem der Ansprüche 1 bis 5, **dadurch gekennzeichnet, dass** der mechanische Antriebsstrang eine längenvariable Gelenkwelle oder eine Gelenkwelle mit fester Länge umfasst.

7. Lenkachse nach einem der Ansprüche 1 bis 6, **dadurch gekennzeichnet, dass** der jeweilige mechanische Antriebsstrang zur Drehmomentübertragung zwischen einem Antriebsmotor (20, 21) und einem Laufrad dient, wobei die Gelenkwelle (29) eine längenvariable Gelenkwelle (29) ist, die wenigstens zwei ineinander teleskopierbare Teilwellen (28, 30) umfasst, von denen wenigstens eine eine Gleitbeschichtung aufweist, und wobei eine Abdeckung (31) vorgesehen ist, mittels der der aus der einen Teilwelle ausziehbare Teil der anderen Teilwelle gekapselt ist.

8. Lenkachse nach einem der Ansprüche 1 bis 7, **dadurch gekennzeichnet, dass** wenigstens ein Untersetzungsgetriebe (34) im Antriebsstrang vorgesehen ist.

9. Lenkachse nach Anspruch 8, **dadurch gekennzeichnet, dass** das Untersetzungsgetriebe (34) als auf der Außenseite des Antriebsstrangs angeordnetes Planetengetriebe (34) ausgeführt ist.

10. Lenkachse nach Anspruch 9, **dadurch gekennzeichnet, dass** das Planetengetriebe (34) in der Radnabe (16) des Laufrads angeordnet ist.

11. Landwirtschaftliches Fahrzeug mit wenigstens einer Lenkachse, **dadurch gekennzeichnet, dass** die Lenkachse (1) nach einem der Ansprüche 1 bis 10 ausgebildet ist.

## Claims

1. A steering axle (1) for agricultural vehicles like self-propelled harvesters, tractors or the like, comprising at least two drive motors (20, 21) for at least two wheels at both sides of the steering axle (1), wherein the at least two drive motors (20, 21) are arranged in mutually juxtaposed relationship between the wheels and provided on both sides is a respective mechanical drive train (29, 33, 34) between the drive motor (20, 21) and the wheel, wherein the steering axle (1) has axle housings (6, 7) and a central axle body (2) which includes a mounting device (3), by means of which the whole steering axle (1) can be fixed swingingly to the vehicle, **characterised in that** the at least two drive motors (20, 21) are arranged substantially centrally between the wheels and are fixed to the common central axle body (2), wherein fixed to the central axle body (2) at both sides is a respective mounting flange (4, 5) adjoined by a respective one of the two axle housings (6, 7), wherein the axle housings (6, 7) are of a two-part or multi-part configuration and wherein the respective mounting flange (4, 5) is provided between the drive motor (20, 21) and the central axle body (2).

2. A steering axle according to claim 1 **characterised in that** the axle housings are substantially closed axle housings (6, 7) for accommodating at least a part of the mechanical drive train (29, 33, 34).

3. A steering axle according to one of claims 1 and 2 **characterised in that** hydraulic or electric motors are provided as the drive motors (20, 21).

4. A steering axle according to one of claims 1 to 3 **characterised in that** hydraulic radial piston motors (20, 21) are provided as the drive motors.

5. A steering axle (1) according to one of claims 1 to 4 **characterised in that** the at least two drive motors (20, 21) are in the form of radial piston motors which include a hydraulically actuable freewheel.

6. A steering axle according to one of claims 1 to 5 **characterised in that** the mechanical drive train includes a variable-length cardan shaft or a fixed-length cardan shaft.

7. A steering axle according to one of claims 1 to 6 **characterised in that** the respective mechanical drive train serves for the transmission of torque between a drive motor (20, 21) and a wheel, wherein the cardan shaft (29) is a variable-length cardan shaft (29) including two shaft portions (28, 30) which can be telescoped into each other and of which at least one has a slide coating and wherein there is provided a cover (31) by means of which the part, which can be extended from the one shaft portion, of the other shaft portion is enclosed.

8. A steering axle according to one of claims 1 to 7 **characterised in that** there is at least one reduction transmission (34) in the drive train.

9. A steering axle according to claim 8 **characterised in that** the reduction transmission (34) is in the form of a planetary transmission (34) arranged on the outside of the drive train.

10. A steering axle according to claim 9 **characterised in that** the planetary transmission (34) is arranged in the wheel hub (16) of the wheel.

11. An agricultural vehicle comprising at least one steering axle **characterised in that** the steering axle (1) is in accordance with one of claims 1 to 10.

## Revendications

1. Essieu directeur (1) pour véhicules agricoles tels que machines de récolte, tracteurs ou analogues, comprenant au moins deux moteurs d'entraînement (20, 21) pour au moins deux roues de roulement situées de part et d'autre de l'essieu directeur (1), les au moins deux moteurs d'entraînement (20, 21) étant disposés côte à côte entre les roues de roulement, et une chaîne de transmission mécanique (29, 33, 34) étant prévue sur chacun des deux côtés entre le moteur d'entraînement (20, 21) et la roue de roulement, l'essieu directeur (1) comportant un carter d'essieu (6, 7) ainsi qu'un corps central d'essieu (2) qui comprend un dispositif de support (3) permettant de fixer l'ensemble de l'essieu directeur (1) de manière pendulaire au véhicule, **caractérisé en ce que** les au moins deux moteurs d'entraînement (20, 21) sont disposés sensiblement au centre entre les roues de roulement et sont fixés au corps central d'essieu commun (2), au corps central d'essieu (2) étant fixée, de chaque côté, une bride de montage (4, 5) à laquelle se raccorde un des deux carters d'essieu (6, 7), les carters d'essieu (6, 7) étant conçus en deux ou plusieurs parties, et chaque bride de montage (4, 5) étant disposée entre le moteur d'entraînement (20, 21) et le corps central d'essieu (2).

2. Essieu directeur selon la revendication 1, **caractérisé en ce que** les carters d'essieu sont des carters d'essieu sensiblement fermés (6, 7) pour recevoir au moins une partie de la chaîne de transmission mécanique (29, 33, 34).

3. Essieu directeur selon une des revendications 1 à 2, **caractérisé en ce que** les moteurs d'entraînement (20, 21) prévus sont des moteurs hydrauliques ou électriques.

4. Essieu directeur selon une des revendications 1 à 3, **caractérisé en ce que** les moteurs d'entraînement prévus sont des moteurs hydrauliques à pistons radiaux (20, 21).

5. Essieu directeur (1) selon une des revendications 1 à 4, **caractérisé en ce que** les au moins deux moteurs d'entraînement (20, 21) sont conformés en moteurs à pistons radiaux qui comprennent un dispositif de roue libre commandé hydrauliquement.

6. Essieu directeur selon une des revendications 1 à 5, **caractérisé en ce que** la chaîne de transmission mécanique comprend un arbre articulé à longueur variable ou un arbre articulé à longueur fixe.

7. Essieu directeur selon une des revendications 1 à 6, **caractérisé en ce que** chaque chaîne de transmission mécanique sert à la transmission du couple entre un moteur d'entraînement (20, 21) et une roue de roulement, l'arbre articulé (29) étant un arbre articulé de longueur variable (29) qui comprend au moins deux arbres partiels télescopiques l'un dans l'autre (28, 30) dont un comporte au moins une garniture de glissement, et une coiffe (31) étant prévue, laquelle permet d'encapsuler la partie du second arbre partiel apte à sortir du premier arbre partiel.

8. Essieu directeur selon une des revendications 1 à 7, **caractérisé en ce qu'**au moins un réducteur (34) est prévu dans la chaîne de transmission.

9. Essieu directeur selon la revendication 8, **caractérisé en ce que** le réducteur (34) est conformé en engrenage planétaire (34) disposé sur le côté extérieur de la chaîne de transmission.

10. Essieu directeur selon la revendication 9, **caractérisé en ce que** l'engrenage planétaire (34) est disposé dans le moyeu de roue (16) de la roue de roulement.

11. Véhicule agricole comprenant au moins un essieu directeur, **caractérisé en ce que** l'essieu directeur (1) est conçu selon une des revendications 1 à 10.
